# EUROPÄISCHE PATENTSCHRIFT

(11) **EP 1 347 027 B1**
(45) Veröffentlichungstag und Bekanntmachung des Hinweises auf die Patenterteilung: **09.11.2005**
(21) Anmeldenummer: 03004006.7
(22) Anmeldetag: 24.02.2003
(51) Int. Cl.: C09J 9/02, C09J 11/04

(54) **Polyacrylat-Haftklebemasse, Herstellung und Verwendung**
Pressure sensitive polyacrylate adhesive
Adhésif polyacrylate sensible à la pression

(30) Priorität: 22.03.2002 DE 10212945
(43) Veröffentlichungstag der Anmeldung: 24.09.2003
(73) Patentinhaber: tesa AG, 20253 Hamburg (DE)
(72) Erfinder: Zöllner, Stephan, 22043 Hamburg (DE); Husemann, Marc, 22605 Hamburg (DE)

(56) Entgegenhaltungen:
- EP-A- 0 288 128
- EP-A- 1 339 073

## Beschreibung

Die Erfindung betrifft eine Polyacrylat-Haftklebemasse, ein Verfahren zur Herstellung haftklebriger Polyacrylate und die Verwendung der Haftklebemasse zur Herstellung von Haftklebstoffartikeln.

Haftklebemassen werden im steigenden Maße zur Herstellung von Haftklebebändern, selbstklebenden Etiketten, Haftschutzfolien oder anderen selbstklebenden Produkten herangezogen. Die hierfür eingesetzten Haftklebemassen müssen bestimmte Eigenschaften aufweisen, wie beispielsweise gute Oberflächenklebrigkeit, hohe Kohäsion, gute Klebrigkeit bei niedrigen und hohen Temperaturen und gute thermische Belastbarkeit. Weiterhin werden aber auch immer speziellere Anforderungen an Haftklebebänder gestellt. So werden in vielen Fällen Füllstoffe hinzugesetzt, die den Herstellungspreis herabzusetzen, aber auch Füllstoffe, die ein spezielles Anforderungsprofil erreichen sollen. Solche Anforderungen können z.B. elektrische Leitfähigkeit, Wiederablösbarkeit von Substraten, Hitzeaktivierung zur Verstärkung der Klebrigkeit oder auch für den Fall der Verklebung auf der Haut der Transport von biologisch aktiven Substanzen durch die Haut in die Blutbahn.

Für das Einbringen der verschiedensten Partikel bzw. Füllstoffe in Haftklebemassen sind zahlreiche Methoden bekannt.

Über das konventionelle Blending werden z.B. hohle Mikropartikel zu einer Acrylathaftklebemasse oder zu einem Acrylatsirup zugemischt (US 3,615,972; US 4,075,238; US 4,287,308; US 5,902,836). Mit dieser Methode kann auch Silicagel zu Acrylathaftklebemassen beigemischt werden (US 4,710,536; US 4,749,590). Nachteilig ist, dass diese Partikel nicht in die Polymermatrix eingebunden werden und somit bei Temperaturanwendungen über einen längeren Zeitraum wandern und sich beispielsweise an der Haftklebemassenoberfläche ansammeln können. Wenn dies geschieht werden die klebtechnischen Eigenschaften negativ beeinflusst.

Für bestimmte Anwendungen ist es erwünscht, dass eine Haftklebemasse, insbesondere innerhalb eines Haftklebeartikels wie eines Klebebandes, eine gewisse elektrische Leitfähigkeit aufweist. Das Ausmaß der Leitfähigkeit sollte nach Möglichkeit einstellbar sein. Um solche Haftklebemassen bereitzustellen ist es aus US 5,773,485 bekannt, metallische, bzw. elektrisch leitende Partikel in konventioneller Weise einem Acrylat-Sirup vor der vollständigen Polymerisation zuzufügen.

Im Patent US 5,916,641 beschreitet man einen anderen Weg und presst elektrisch leitende Partikel auf die Klebemassenoberfläche. Beide Methoden weisen wiederum die obengenannten Nachteile auf und die Partikel werden wiederum nicht in der Polymermatrix eingebunden.

Das der Erfindung zugrunde liegende Problem besteht daher darin, metallische oder elektrisch leitende Partikel in eine Polyacrylat-Haftmasse so einzubringen, dass die Partikel gleichzeitig innerhalb der Haftklebemasse räumlich fixiert werden, so dass ein Wandern und Agglomerieren der Partikel zuverlässig vermieden wird.

Das Problem wird gelöst durch Bereitstellen einer Polyacrylat-Haftklebemasse, die über Sulfid- oder Disulfid-Brücken mit dem Acrylatgerüst vernetzte Metall-, metallhaltige oder metallbeschichtete Partikel enthält.

Die Umsetzung von Gold-Oberflächen mit schwefelhaltigen Reagentien ist als solche in der Literatur bekannt. So beschreibt Whitesides in: "K. Berggren, A. Bard, J.L. Wilbur, J.D. Gillaspy, A.G. Helg, J.J. McClelland, S.L. Rolston, W.D. Phillips, M. Prentiss, and G.M. Whitesides, "Microlithography by Using Neutral Metastable Atoms and Self-Assembled Monolayers," Science **269,** 1255 (1995)" die Herstellung von SAMs (Self-Assembling Monolayers) durch Umsetzung von Gold-Oberflächen mit Thiolverbindungen. Neben biotechnologischen Anwendungen (Langmuir, 2000, 16, 6927-6936) lassen sich z.B. diese Schichten auch als Organische Dielektrische Substanzen nutzen (Journal of American Society, 1999, 121, 7895-7906). Ferner lassen sich neben Gold auch Silber und Kupferoberflächen mit Thiolen modifizieren. Auch Goldpartikel sind bereits mit Thiolen modifiziert worden (Langmuir, 1996, 12, 3257-3264). Thiolmodifizierte Goldoberflächen wurden zum ersten Mal von Husemann und Hawker zur Initiierung von Polymerisationen genutzt (Angewandte Chemie, 1999, 111, 685-687). Neben der ROP (Ring Opening Polymerization) haben Husemann und Abbott auch eine kontrollierte radikalische Polymerisation von Goldoberflächen realisiert (Macromolecules, 2000, 33, 597-605). Ein Verfahren zur Additivierung von Acrylathaftklebemassen mit Metallpartikeln, bei dem die Metallpartikel chemisch in die Haftklebemasse eingebunden werden und gleichzeitig zur Vernetzung oder Polymerisation eingesetzt werden, war jedoch noch nicht bekannt.

Es wurde gefunden, dass die Einbindung von Metallpartikeln und von metallhaltigen oder metallbeschichteten Partikeln in Polyacrylat-Haftklebemassen mit Hilfe schwefelhaltiger Vernetzungsreagenzien in weiten Additiv-Konzentrationsbereichen ohne Verlust der Haftklebrigkeit möglich ist. Die Größe Der Partikel ist für das Verfahren nicht beschränkend, es können also grundsätzlich beliebig große Partikel verwendet werden, solange diese in einer Haftklebemasse verarbeitet werden können. Bevorzugt sind Partikelgrößen im □m-Bereich, d.h. zwischen 0,1 und 100 □m.

Die Unteransprüche betreffen vorteilhafte Weiterentwicklungen und Ausführungsformen.

Bei den metallhaltigen Partikeln gemäß dieser Erfindung kann es sich um mineralische oder organische metallhaltige Partikel oder um ihrerseits Metallpartikel enthaltende Polymerpartikel handeln. Die metallbeschichteten Partikel sind vorzugsweise metallbeschichtete Polymerpartikel, die beispielsweise durch Emulsions- oder Suspensionspolymerisation und anschließende Beschichtung mit Metall, z.B. durch Bedampfen, hergestellt werden können.

Die Metallpartikel oder die Metallbeschichtung können vorzugsweise aus Gold, Silber oder Kupfer bestehen. Die Verwendung anderer Metalle, u.a. von Zinn oder Zink, ist möglich, sofern diese mit Thiolen oder Dithioverbindungen kovalente Bindungen eingehen.

In einer weiteren im erfinderischen Sinne sehr günstigen Ausführungsform wird für die Polymerisation des Polyacrylats der Haftklebemasse eine Monomermischung eingesetzt wird, welche Acryl- und Methacrylsäure-Monomere der folgenden Struktur 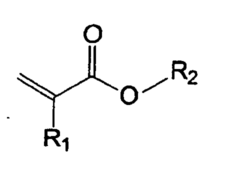 mit R₁ = H oder CH₃
und R₂ = eine Alkylkette mit 2 - 20 C-Atomen
in einem Anteil von 65 bis 100 Gew.-% enthält.

Die Polyacrylat-Haftklebemasse enthält dadurch entsprechende Acryl- und/oder Methacrylsäure-Einheiten. Beispiele für geeignete Acrylate und Methacrylate sind: Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.

Vorzugsweise kann die der Polyacrylatmasse zugrundeliegende Monomermasse 0 bis 35 Gew.-% funktionalisierte Vinylverbindungen enthalten. Beispiele für geeignete Vinylverbindungen sind: Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besondersbevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren.

Optional können weitere Komponenten in der Monomermischung vorhanden sein.

Die Zusammensetzung der entsprechenden Monomere wird bevorzugt so gewählt, daß die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen.

Die Erfindung umfasst auch ein Verfahren zur Herstellung der neuen erfindungsgemäßen haftklebrigen Polyacrylatmassen durch radikalische Polymerisation, bei welchem der Monomermischung oder dem Prepolymer (Acrylatsirup) oder der fertigen Polyacrylathaftklebemasse
a) Metall-, metallhaltige oder metallbeschichtete Partikel, und
b) mercaptofunktionalisierte, mit dem Metall reaktionsfähige Vernetzer zugesetzt werden.

Die mercaptofunktionalisierten, mit dem Metall reaktionsfähigen Vernetzer sind bevorzugt mercaptofunktionalisierten Photoinitiatoren der allgemeinen Formel (I) und/oder (II)

**H-S-R** **(I)**

**R-S-S-R'** **(II),**

wobei R und R' unabhängig voneinander gewählt sind aus den folgenden Gruppen:
a) Benzophenon-, Acetophenon-, Benzil-, Benzoin-, Hydroxyalkylphenon-, Phenylcyclohexylketon-, Anthrachinon-, Thioxanthon-, Triazin-, oder Fluorenonreste, wobei jeder dieser Reste mit einem oder mehreren Halogenatomen und/oder einer oder mehreren Alkoxygruppen und/oder einer oder mehreren Aminogruppen oder Hydroxygruppen substituiert sein kann,
b) Reste, welche einen oder mehrere der unter a) genannten substituierten oder unsubstituierten Reste beinhalten.

Weitere vorteilhafte Ausgestaltungen des Verfahrens sind in den Unteransprüchen genannt. Vorzugsweise beträgt der Anteil der Vernetzer 0,01 bis 5 Gew.-% bezogen auf die Summe der eingesetzten Monomere.

Für den Fall, dass die Fotoinitiator-funktionalisierten Metallpartikel nach der Polymerisation zugegeben werden, kann die freie radikalische Polymerisation zur Herstellung der Polyacrylate konventionell in Gegenwart eines oder mehrerer organischer Lösungsmittel und/oder in Gegenwart von Wasser oder in Substanz erfolgen. Bevorzugt wird so wenig Lösungsmittel wie möglich eingesetzt. Die Polymerisationszeit beträgt - je nach Umsatz und Temperatur - zwischen 6 und 48 h.

Die Polymerisation kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N₂-Atmosphäre und Überdruck ausgerüstet sind.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wässrigen Medien bzw. Gemischen aus organischen und wässrigen Lösungsmitteln werden zur Polymerisation bevorzugt dem Fachmann zu diesem Zwecke geläufige Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden.

Für den Fall, das die Fotoinitiator-funktionalisierten Metallpartikel dem Präpolymer hinzugegeben werden, wird bevorzugt in einem zweistufigen Prozess zunächst die Acrylatmonomermischung in Substanz mit einem Fotoinitiator bis zu einem Umsatz von etwa 20 % vorpolymerisiert. Der Monomer/Polymermischung werden die Fotoinitiator-funktionalisierten Metallpartikel zugegeben, und dieser Syrup auf ein Trägermaterial beschichtet und UV vernetzt. Im US Patent 5,695,837 werden z.B. viele Verfahrensvarianten zur Herstellung von Präpolymeren (Acryl-Syrup) dargelegt. Das Präpolymer kann mit unterschiedlichen Viskositäten hergestellt werden, dem Präpolymer können optional noch weitere Substanzen wie zusätzliche Monomere, Silicagel, Fotoinitiatoren, Vernetzer oder weitere Füllstoffe zugesetzt werden. Die Polymerisation erfolgt durch UV-Licht in einem Bereich zwischen 280 und 400 nm. Ferner lassen sich zu dem Präpolymer auch Harze und Weichmacher beimischen.

Zur Präpolymerisation können die erfindungsgemäßen Polymere in üblicher Weise modifiziert werden. Beispielsweise kann es vorteilhaft sein, klebrigmachende Harze, wie Terpen-, Terpenphenol-, C5-, C9-, C5/C9- Kohlenwasserstoff-, Pinen-, Inden- oder Kolophoniumharze auch in Kombination miteinander zuzusetzen.

Bei der Polymerisation zu vollständigem Umsatz können auch neben den beigesetzten UV-Fotoinitiatoren die Fotoinitiator-modifizierten Metallpartikel zur initiierung der Polymerisation oder der Vernetzung eingesetzt werden. Die Initiierung erfolgt dann wiederum durch UV-Licht in einem Bereich zwischen 280 und 400 nm.

Weiterhin werden optional Vernetzer und dem Fachmann bekannte Promotoren zur UV-Vernetzung beigemischt. Multifunktionelle Acrylate sind als Vernetzer besonders vorteilhaft geeignet.

Weiterhin lassen sich die Fotoinitiator-funktionalisierten Metallpartikel auch als UV-Initiatoren zur Acrylatpolymerisation einsetzen. Die Polymerisation erfolgt in Lösung oder in Substanz. Bevorzugt wird so wenig Lösungsmittel wie möglich eingesetzt. Die Polymerisationszeit beträgt - je nach Umsatz und Temperatur - zwischen 1 und 12 h.

Die Polymerisation kann in Polymerisationsreaktoren durchgeführt werden, die im allgemeinen mit einem Rührer, mehreren Zulaufgefäßen, Rückflußkühler, Heizung, einer UV-Quelle und Kühlung versehen sind und für das Arbeiten unter N₂-Atmosphäre und Überdruck ausgerüstet sind.

Bei der Lösungsmittelpolymerisation werden als Lösemittel vorzugsweise Lösemittel eingesetzt, die im UV-Bereich kaum Licht absorbieren. So werden z.B. Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet.

Weiterhin kann auch in Substanz polymerisiert werden, wobei die Polymerisation bei einem bestimmten Umsatz abgebrochen wird (Präpolymer) oder bis zu vollständigem Umsatz polymerisiert wird.

Nach der Polymerisation in Lösemittel kann das Polymerisationsmedium unter vermindertem Druck entfernt werden, wobei dieser Vorgang bei erhöhten Temperaturen beispielsweise und vorteilhaft im Bereich von 80 bis 150 °C durchgeführt wird. Die Polymere können dann in lösemittelfreiem Zustand, insbesondere als Schmelzhaftkleber, eingesetzt werden. Je nach Weiterverarbeitung und Anwendungsgebiet ist es gegebenenfalls auch von Vorteil, die erfindungsgemäßen Polymere in Substanz herzustellen.

Alternativ kann Polyacrylat auch aus Lösung verarbeitet und beschichtet werden, wobei zur Lösemittel-Beschichtung konventionelle Technologien angewendet werden.

Für die Beschichtung der Polymere werden vorteilhaft in üblicher Weise durch Streichen, Spritzen, Walzen, Rakeln, Gießen oder Extrudieren, gegebenenfalls bei erhöhter Temperatur - meist im Temperaturbereich von 20 bis 150 °C - auf zu diesem Zwecke als Trägermaterialien geeignete Substrate aufgebracht, beispielsweise auf Papier, Pappe, Holz, Metalle und Kunststofffolien, z.B. aus weichgemachten PVC, Polyethylen, Polyamiden, Polyethyleglykolterephthalat oder Polypropylen. Soweit dabei Lösemittel verwendet werden, können diese von den Überzügen leicht, gegebenenfalls bei Raumtemperatur oder wenig erhöhten Temperaturen, im allgemeinen bei Temperaturen von 20 - 150 °C, vorzugsweise von 50 - 100 °C, abgedampft werden, wobei in üblicher Weise Heizstrahler oder Warmluftwälzvorrichtungen eingesetzt werden.

In weiterhin sehr vorteilhafter Weise für das erfinderische Verfahren werden die haftklebrigen Polyacrylate durch ultraviolette Strahlung in einem Wellenlängenbereich von 200 bis 400 nm vernetzt. Die Vernetzung der erfindungsgemäßen Schmelzhaftklebemassen erfolgt in günstiger Weise durch kurzzeitige UV-Bestrahlung mit handelsüblichen Quecksilber-Hochdruck oder Mitteldrucklampen mit einer Leistung von z.B. 80 bis 200 W/cm. Es kann angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

Die Erfindung betrifft zudem die Verwendung der beschriebenen Polyacrylat-Haftklebemassen, bzw. der haftklebrigen Polyacrylate, welche durch das erfinderische Verfahren hergestellt wurden, zur Herstellung von Haftklebstoffartikeln, insbesondere zur Herstellung eines Klebebandes mit einer ein- oder beidseitig auf einem Träger aufgetragenen Acrylathaftklebemasse.

Die durch das erfinderische Verfahren hergestellten Polyacrylate eignen sich insbesondere für Haftklebebänder, Haftklebefolien oder Haftklebeetiketten mit verbesserter elektrischer Leitfähigkeit.

Die Haftklebeeigenschaften der durch das erfinderische Verfahren hergestellten Polyacrylate nach der UV-Bestrahlung werden mit den im folgenden beschriebenen Testmethoden ermittelt.

Für die Prüfung werden Folien aus PET-Folie mit einem Masseauftrag von 50 g/m² beschichtet.

Sofern für die klebtechnische Ausprüfung gelöste Polymerisate eingesetzt werden, werden die Lösemittel 20 Minuten bei 60 °C im Trockenschrank abgedampft. Die getrockneten Haftklebeschichten wurden mit einer Eltosch-Anlage mit Quecksilber-Mitteldrucklampen bestrahlt. Der Abstand der UV-Lampen zu den bestrahlten Haftklebeschichten betrug 5 cm, die Leistung der UV-Lampen liegt bei 120 W/cm.

Die Erfindung wird nachfolgend durch Beispiele erläutert. Mengenangaben, Anteile und Prozentanteile sind auf die Gesamtmenge der Monomeren bezogen.

### Herstellung der UV-aktivierbaren Thioregler

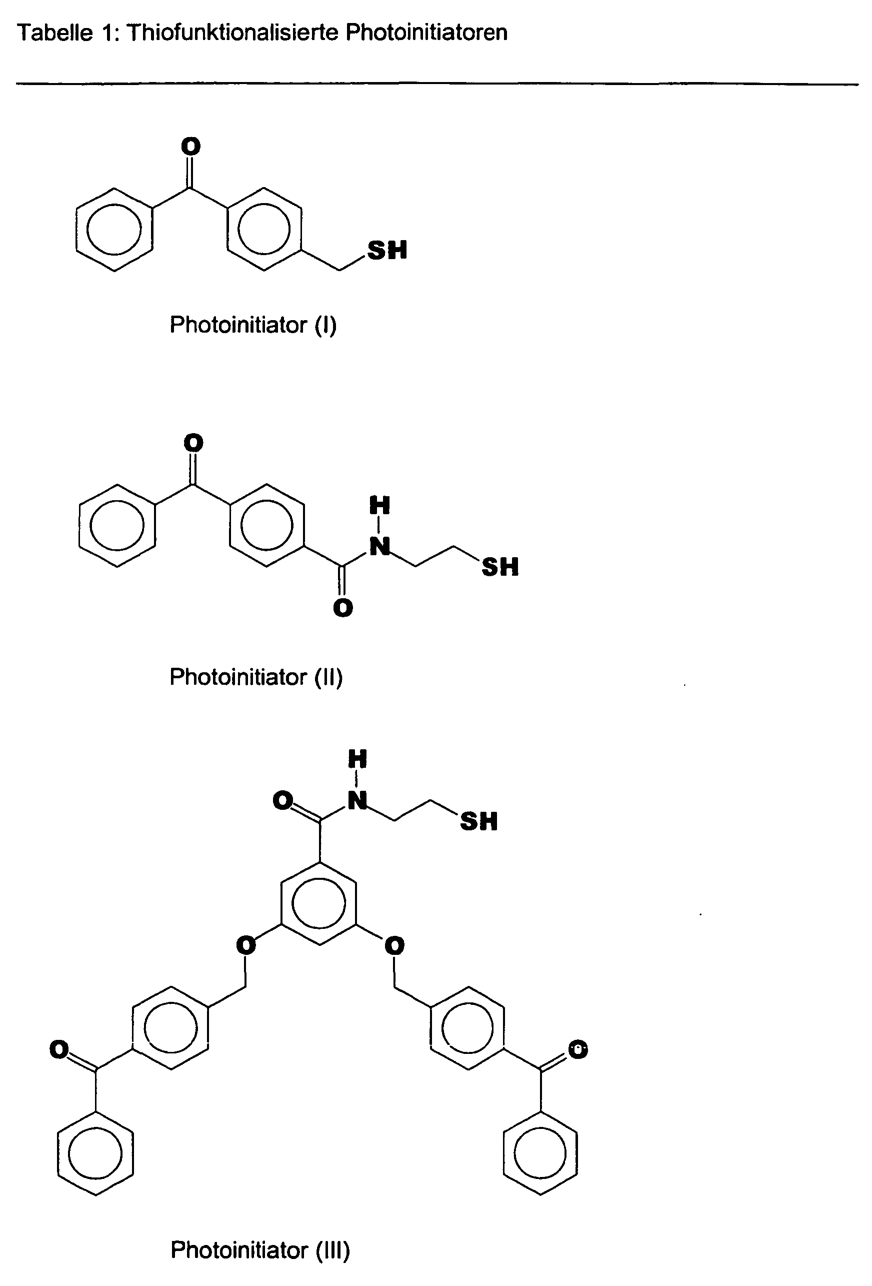

Die für die Beispiele dargestellten thio-funktionalisierten Photoinitiatoren sind in Tabelle 1 gezeigt.

### Beispiel 1

### Herstellung von 4-Benzoylbenzoylchlorid

1,0 kg (4,2 mol) 4-Benzoylbenzoesäure wurden in einen 5 L Reaktor, ausgestattet mit einem Rückflußkühler und einem Rührer, gefüllt und zusätzlich 645 ml (8,84 mol) Thionylchlorid und 725 ml Toluol hinzugegeben. Anschließend wurden 3,5 ml DMF hinzugegeben und die Mischung für 4 h unter Rückfluß gekocht. Nach dem Abkühlen wurde das Lösemittel unter reduziertem Druck entfernt, und überschüssiges Thionylchlorid wurde durch dreimaliges Evaporieren mit jeweils 500 ml Toluol entfernt. Das Produkt wurde in einem Gemisch aus Toluol/Hexan 1:4 umkristallisiert und mit 934 g (86 % Ausbeute) nach dem Trocknen im Vakuumofen gewonnen.
Das ¹H-NMR ergab bei 300 MHz (CDCl₃): 7,18 - 8,26 ppm (m, 9 H). Die Signale waren konsistent mit dem gewünschten Produkt. Alle chemischen Verschiebungen sind gegen Tetramethylsilan als interner Standard angegeben.

### Beispiel 2

### Herstellung von 4-Brommethylbenzophenon

750 g (3,82 mol) 4-Methylbenzophenon wurden in einen 5 L Reaktor, ausgestattet mit einem Rückflußkühler und einem Rührer, gefüllt und zusätzlich 2850 ml Benzol hinzugegeben. Die Mischung wurde bis zum Rückfluß erhitzt und tropfenweise 610 g (3,82 mol) Brom in 330 ml Benzol gelöst hinzugegeben. Die Zugabegeschwindigkeit betrug etwa 1,5 ml/min. Der Reaktor wurde mit einer Halogenlampe mit 100 W zur Initiierung der Reaktion, nachfolgend mit verschiedenen Zyklen identischer Leistung bestrahlt.
In den Zyklen wurde jeweils abwechselnd über eine Dauer von 5 s bestrahlt und anschließend über eine Dauer von 40 s nicht bestrahlt. Nach 1 h wurde dieser Zyklus auf eine Abfolge von 10 s Bestrahlung und 40 s ohne Bestrahlung verändert. Nach Reaktionsende (Entfärbung der dunkelbraunen Lösung durch Abreaktion mit Brom) wurde das Rohprodukt mittels GC analysiert. Es wurde eine Mischung aus Monobrom-, Dibrommethylbenzophenon und nicht reagierten 4-Methylbenzophenon gefunden. Die Reaktionsmischung wurde mit 10 g Natriumthiosulfit in 100 g Wasser und 3 mal mit jeweils 200 g Wasser gewaschen. Anschließend wurde das Produkt über Natriumsulfat getrocknet und zweimal in Toluol/Hexan 1:3 umkristallisiert. Nach Trocknung im Vakuum wurden 590 g von 4-Brommethylbenzophenon (56 % Ausbeute) isoliert.
Das ¹H-NMR ergab bei 300 MHz (CDCl₃) [ppm]: 7,18 - 7,77 (m, 9 H), 4.49 (s, 2H). Die Signale waren konsistent mit dem gewünschten Produkt.

### Beispiel 3

### Darstellung von 4-Mercaptomethylbenzophenon (I)

4,14 g (54,4 mmol) Thioharnstoff wurden in 31,5 ml Ethanol (95 %) gelöst, 15,0 g (54,4 mmol) 4-Brommethylbenzophenon unter leichtem Wärmen und Rühren hinzugegeben und die Mischung über Nacht bei Raumtemperatur gerührt. Das feste Produkt wurde durch Filtration isoliert und mehrmals mit Ethanol gewaschen. Nach Trocknung im Vakuumofen wurden 15,6 g isoliert (82 % Ausbeute). Es wurde nicht weiter aufgereinigt.
12,5 g (35,5 mmol) dieses Hydrobromidsalzes wurden in 250 ml Wasser unter Erwärmen gelöst und anschließend 5,7 g Natriumhydroxid (0,143 mol) gelöst in 10 ml Wasser hinzugegeben. Nach refluxieren für 45 Minuten wurde die Lösung auf Raumtemperatur abgekühlt, mit konzentrierter Schwefelsäure ein pH-Wert kleiner 2 eingestellt und das Produkt 5 mal mit 60 ml Chloroform extrahiert. Die vereinigten Extrakte wurden mit 100 ml Wasser gewaschen und über Natriumsulfat getrocknet. Nach dem Entfernen des Lösemittels wurden 7,9 g (97 %) isoliert.
Der Schmelzpunkt betrug 54 °C. Das ¹H-NMR ergab bei 300 MHz (CDCl₃) [ppm]: 7,14 - 7,78 (m, 9 H), 3,70 (d, 2H) und 1,77 (t, 1 H). Die Signale waren konsistent mit dem gewünschten Produkt.

### Beispiel 4

### Darstellung von N-(2-Mercaptoethyl-)-4-benzoylbenzamid (II)

24,39 g (0.215 mol) 2-Aminoethanthiolhydrochlorid wurden in einen 1 L Dreihalskolben in 200 ml Chloroform gelöst unter Argon gegeben. Eine Lösung aus 50 g (0,204 mol) 4-Benzoylbenzoylchlorid und 250 ml Chloroform wurde anschließend über einen Zeitraum von 45 Minuten hinzugetropft. Die Mischung wurde über Nacht bei Raumtemperatur gerührt. Dann wurde mit Wasser und einer 0,1 N HCI-Lösung gewaschen und über Natriumsulfat getrocknet. Nach dem Trocknen wurde zweimal aus Toluol umkristallisiert und 50 g eines weißen Pulvers (86 % Ausbeute) gewonnen.
Der Schmelzpunkt betrug 112 °C. Das ¹H-NMR ergab bei 300 MHz (CDCl₃) [ppm]: 7,18 - 7,82 (m, 9 H), 6,70 - 7,02 (m, 1H), 3,52 (q, 2H), 2,54 - 2,97 (m, 2H) und 1,37 (t, 1H). Die Signale waren konsistent mit dem gewünschten Produkt.

### Beispiel 5

### Darstellung von N-(2-Mercaptoethyl)-3,5-bis(4-benzoylbenzoyloxy)benzamid (III)

46,2 g (0,30 mol) 3,5-Dihydroxybenzoesäure wurden in einen 250 ml Kolben mit Soxlett-Extraktor und Rückflußkühler eingefüllt. Es wurden 48,6 ml Methanol und 0,8 ml Schwefelsäure hinzugegeben und 50 g Molekularsieb (3Å) in den Soxlett-Extraktor gefüllt. Der Extraktor wurde mit Methanol befüllt und die gesamte Mischung über Nacht refluxiert. Anschließend wurde das methylierte Rohprodukt nach Entfernen des Lösemittels isoliert.
Das gesamte Produkt wurde in einen 2 L Reaktor mit Rückflußkühler und Rührer gefüllt, anschließend wurden 173,25 g (0,63 mol) 4-Brommethylbenzophenon, 207 g (1,50 mol) Kaliumcarbonat und 1200 ml Aceton hinzugegeben. Die Reaktion wurde über Nacht refluxiert und mit Dünnschichtchromatographie verfolgt. Nach vollständigem Umsatz wurde der Feststoff abfiltriert und Aceton unter verringertem Druck entfernt. Der Feststoff wurde in 1 L Wasser gelöst und dann dreimal mit je 1 L Chloroform extrahiert. Die Extrakte wurden kombiniert mit der in Aceton löslichen Fraktion, über Natriumsulfat getrocknet und 177 g vom Rohprodukt isoliert. Das Rohprodukt wurde zweimal in Acetonitril rekristallisiert und letztendlich 145 g isoliert (87 %).
Der Schmelzpunkt betrug 130 °C. Das ¹H-NMR ergab bei 300 MHz (CDCl₃) [ppm]: 7,22-7,78 (m, 18 H), 7,15 (d, 2H), 6,69 (t, 1H), 5,02 (s, 4H) und 3,84 (s, 3H). Die Signale waren konsistent mit dem gewünschten Produkt Methyl-3,5-bis(4-benzoylbenzoyloxy)-benzoat.

60,1 g (0,108 mol) Methyl-3,5-bis(4-benzoylbenzoyloxy)-benzoat wurden in einem 2 L Reaktor gefüllt, 120 ml Wasser, 480 ml Methanol und 6,48 g (0,162 mol) Natriumhydroxid hinzugegeben. Die Reaktionsmischung wurden für 3 h refluxiert. Nach der Hydrolyse des Esters wurde abgekühlt und Methanol unter reduziertem Druck entfernt. Das verbleibende Natriumsalz wurde in 2400 ml warmen Wasser gelöst und die freie Säure anschließend mit Salzsäure gefällt. Nach Filtration, Waschen mit Wasser und Trocknen im Vakuumofen wurden 54 g eines weißen Pulvers (92 %) isoliert.
Der Schmelzpunkt betrug 188 °C. Der Schmelzpunkt betrug 130 °C. Das ¹H-NMR ergab bei 300 MHz (CDCl₃) [ppm]: 7,28 - 7,78 (m, 18 H), 7,15 (d, 2H), 6,86 (t, 1H) und 5,16 (s, 4H). Die Signale waren konsistent mit dem gewünschten Produkt 3,5-bis(4-benzoylbenzoyloxy)benzoesäure.
20 g (36,86 mmol) 3,5-bis(4-benzoylbenzoyloxy)benzoesäure wurde mit 36 ml Toluol, 5,4 ml (74,0 mmol) Thionylchlorid und 28 µl N,N-Dimethylformamid in einen 250 ml Kolben gefüllt. Die Mischung wurde für 4 h refluxiert. Nach der Bildung des Säurechlorids wurde auf Raumtemperatur abgekühlt, das Lösemittel und überschüssiges Thionylchlorid unter reduziertem Druck entfernt und durch weitere 4-malige Evaporation mit je 20 ml Chloroform weiter gereinigt. Nach Rekristallisation in Toluol wurden 18,5 g des Produktes isoliert (89% Ausbeute).
Der Schmelzpunkt betrug 125 °C. Das ¹H-NMR ergab bei 300 MHz (CDCl₃) [ppm]: 7,29 - 7,78 (m, 18 H), 7,20 (d, 2H), 6,79 (t, 1H), 5,08 (s, 4H). Die Signale waren konsistent mit dem gewünschten Produkt 3,5-bis(4-benzoylbenzoyloxy)benzoylchlorid.
4,19 g (36,7 mmol) 2-Aminoethanthiolhydrochlorid wurde in einen 250 ml Kolben mit Rückflußkühler und Rührer eingefüllt und dann 15 ml Chloroform und 10,64 ml (76,5 mmol) Triethylamin hinzugegeben. Die Reaktionsmischung wurde mittels eines Eisbades auf 0 °C abgekühlt und dann 18,4 g (32,8 mmol) 3,5-bis(4-benzoylbenzoyloxy)benzoylchlorid gelöst in 50 ml Chloroform tropfenweise über den Zeitraum von 50 Minuten hinzugegeben. Nach weiteren 30 Minuten Eiskühlung wurde für 2 h auf Raumtemperatur aufgewärmt. Das Produkt wurde mit 150 ml Chloroform verdünnt, 5 mal mit jeweils 250 ml 0,1 N Salzsäure gewaschen, über Natriumsulfat getrocknet und letztendlich zweimal in 15:1 Toluol/Hexan umkristallisiert. Vom Produkt wurden 12,9 g (65 % Ausbeute) isoliert.
Der Schmelzpunkt betrug 114 °C. Das ¹H-NMR ergab bei 300 MHz (DMSO-d6) [ppm]: 7,20 - 7,80 (m, 18 H), 7,00 (d, 2H), 6,66 (t, 1H), 6,52 (breit t, 1H), 5,08 (s, 4H), 3,50 (q, 2H), 2,74 (q, 2H) und 1,40 (t, 1H). Die Signale waren konsistent mit dem gewünschten Produkt N-(2-Mercaptoethyl)-3,5-bis(4-benzoylbenzoyloxy)benzamid (III).

### Herstellung der Thiolfunktionalsierten Metallpartikel

### Beispiel 6

In einem 100 ml Glasgefäß werden unter Rühren 100 mg Gold-Partikel (1 - 3 µm Durchmesser) in eine Mischung aus 25 ml Ethanol und 25 ml Aceton hinzugegeben und dispergiert. Anschließend wird 1 g der Verbindung (I) zugegeben und im Aceton-Ethanol Gemisch gelöst. Nach 2 h ist die Reaktion der Thiole mit den Gold-Partikeln vollzogen. Die Thiol-funktionalisierten Metallpartikel werden bevorzugt in dieser Fotoinitiator Lösung aufbewahrt. Je nach Verwendung in der Haftklebemasse können die Thiol-funktionalisierten Metallpartikel abfiltriert oder aus der Dispersion der Klebemasse zugefügt werden.

### Beispiel 7

In einem 100 ml Glasgefäß werden unter Rühren 100 mg Gold-Partikel (1 - 3 µm Durchmesser) in eine Mischung aus 25 ml Ethanol und 25 ml Aceton hinzugegeben und dispergiert. Anschließend wird 1 g der Verbindung (II) zugegeben und im Aceton-Ethanol Gemisch gelöst. Nach 2 h ist die Reaktion der Thiole mit den Gold-Partikeln vollzogen. Die Thiol-funktionalisierten Metallpartikel werden bevorzugt in dieser Fotoinitiator Lösung aufbewahrt. Je nach Verwendung in der Haftklebemasse können die Thiol-funktionalisierten Metallpartikel abfiltriert oder aus der Dispersion der Klebemasse zugefügt werden.

### Beispiel 8

In einem 100 ml Glasgefäß werden unter Rühren 100 mg Polystyrol-ummantelte Gold-Partikel™ (25 µm Durchmesser, Fa. Sekisui Fine Chemical) in eine Mischung aus 25 ml Ethanol und 25 ml Aceton hinzugegeben und dispergiert. Anschließend wird 1 g der Verbindung (III) zugegeben und im Aceton-Ethanol Gemisch gelöst. Nach 2 h ist die Reaktion der Thiole mit den Gold-Partikeln vollzogen. Die Thiol-funktionalisierten Metallpartikel werden bevorzugt in dieser Fotoinitiator Lösung aufbewahrt. Je nach Verwendung in der Haftklebemasse können die Thiol-funktionalisierten Metallpartikel abfiltriert oder aus der Dispersion der Klebemasse zugefügt werden.

### Testmethoden

### 180° Klebkrafttest (Testmethode A)

Ein 20 mm breiter Streifen einer auf einer Polyesterfolie laminierten Acrylathaftklebemasse wurde auf zweimal mit Aceton und einmal mit Isopropanol gewaschenen Stahlplatten aufgebracht. Der Haftklebestreifen wurde zweimal mit einem 2 kg Gewicht auf das Substrat aufgedrückt. Das Klebeband wurde anschließend sofort mit einer Geschwindigkeit von 300 mm/min und im 180°-Winkel vom Substrat abgezogen. Alle Messungen wurden bei Raumtemperatur unter klimatisierten Bedingungen durchgeführt.
Die Messergebnisse sind in N/cm angegeben und sind gemittelt aus drei Messungen.

### Scherfestigkeit (Testmethode B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem 2 kg Gewicht das Klebeband viermal auf den Stahlträger gedrückt. Bei Raumtemperatur und bei 70°C wurde ein 1 kg Gewicht an dem Klebeband befestigt.
Die gemessenen Scherstandzeiten sind in Minuten angegeben und entsprechen dem Mittelwert aus drei Messungen.

### Polymerisationen

### Beispiel 9

In einem konventionellen 2 L Glasreaktor, ausgestattet mit einem mechanischen Rührer, Rückflußkühler, Temperaturinnenfühler und einem Heizbad, wurden 320 g 2-Ethyl-hexylacrylat, 60 g Butylacrylat, 20 g Acrylsäure und 200 g Aceton hinzugegeben. Nach 30 Minuten inertisieren mit Stickstoffgas wurde unter Rühren auf 58 °C Innentemperatur aufgeheizt und dann 0,2 g AIBN (Azobisisobutyronitril) hinzugeben. Nach 1,5 h Reaktionszeit wurden 0,2 g AIBN, nach 3 h 100 g Aceton hinzugegeben. Nach 8 und 10 h Reaktionszeit wurden jeweils 0,2 g Perkadox© 16 (Bis(4-tert.-Butylcyclohexanyl)-peroxy-dicarbonat der Fa. Akzo Nobel) zugegeben, nach 10 h außerdem mit weiteren 100 g Aceton verdünnt. Die Polymerisation wurde nach 24 h durch Abkühlen abgebrochen.
100 g der so hergestellten Haftklebemasse wurden mit Aceton auf 35 % (fest) herunterverdünnt, mit 1 Gewichtsanteil Genomer 4212™ (Fa. Rahn) sowie mit 100 mg Gold-Partikeln, hergestellt nach Beispiel 6, abgemischt und anschließend aus Lösung auf einen mit Saran geprimerten 23 µm dicken PET-Träger aufgetragen. Nach Lagerung von 20 Minuten bei 60°C wurden die getrockneten Haftklebeschichten mit einer Eltosch-Anlage mit Quecksilber-Mitteldrucklampen bestrahlt. Der Abstand der UV-Lampen zu den bestrahlten Haftklebeschichten betrug 5 cm, die Leistung der UV-Lampen lag bei 120 W/cm. Die Haftklebemasse wurde mit 4 Durchgängen bei einer Bahngeschwindigkeit von 20 m/min bestrahlt.

### Beispiel 10

Es wurde analog Beispiel 9 vorgegangen. 100 g der Haftklebemasse wurde mit Aceton auf 35 % (fest) herunterverdünnt, mit 1 Gewichtsanteil Genomer 4212™ (Vernetzungsbeschleuniger, Fa. Rahn) sowie mit 250m g Gold-Partikeln, hergestellt nach Beispiel 7, abgemischt und anschließend aus Lösung auf einen mit Saran geprimerten 23 µm dicken PET-Träger aufgetragen. Nach Lagerung von 20 Minuten bei 60°C wurden die getrockneten Haftklebeschichten mit einer Eltosch-Anlage mit Quecksilber-Mitteldrucklampen bestrahlt. Der Abstand der UV-Lampen zu den bestrahlten Haftklebeschichten betrug 5 cm, die Leistung der UV-Lampen lag bei 120 W/cm. Die Haftklebemasse wurde mit 4 Durchgängen bei einer Bahngeschwindigkeit von 20 m/min bestrahlt.

### Beispiel 11

Es wurde analog Beispiel 9 vorgegangen. 100 g der Haftklebemasse wurde mit Aceton auf 35 % (fest) herunterverdünnt, mit 1 Gewichtsanteil Genomer 4212™ (Vernetzungsbeschleuniger, Fa. Rahn) sowie mit 1 g Gold-Partikeln, hergestellt nach Beispiel 8, abgemischt und anschließend aus Lösung auf einen mit Saran geprimerten 23 µm dicken PET-Träger aufgetragen. Nach Lagerung von 20 Minuten bei 60°C wurden die getrockneten Haftklebeschichten mit einer Eltosch-Anlage mit Quecksilber-Mitteldrucklampen bestrahlt. Der Abstand der UV-Lampen zu den bestrahlten Haftklebeschichten betrug 5 cm, die Leistung der UV-Lampen lag bei 120 W/cm. Die Haftklebemasse wurde mit 4 Durchgängen bei einer Bahngeschwindigkeit von 20 m/min bestrahlt.

### Vergleichsbeispiel1

Es wurde analog Beispiel 9 vorgegangen. 100 g der Haftklebemasse wurde mit Aceton auf 35 % (fest) herunterverdünnt, mit 1 Gewichtsanteil Genomer 4212™ (Vernetzungsbeschleuniger, Fa. Rahn) sowie mit 250 mg unbehandelten Gold-Partikeln abgemischt und anschließend aus Lösung auf einen mit Saran geprimerten 23 µm dicken PET-Träger aufgetragen. Nach Lagerung von 20 Minuten bei 60°C wurden die getrockneten Haftklebeschichten mit einer Eltosch-Anlage mit Quecksilber-Mitteldrucklampen bestrahlt. Der Abstand der UV-Lampen zu den bestrahlten Haftklebeschichten betrug 5 cm, die Leistung der UV-Lampen lag bei 120 W/cm. Die Haftklebemasse wurde mit 4 Durchgängen bei einer Bahngeschwindigkeit von 20 m/min bestrahlt.

Die UV-vernetzten Haftklebebänder wurden auf Klebkraft auf Stahl (Testmethode A) und auf die Kohäsion durch einen Schertest bei Raumtemperatur und bei 70 °C getestet (Testmethode B).
Die Ergebnisse werden in Tabelle 2 zusammengestellt.

**Tabelle 2**

| • | KK-Stahl [N/cm] | SSZ, RT, 10 N [min] | SSZ, 70 °C, 10 N [min] |
|---|---|---|---|
| Beispiel 9 | 5.3 | 2425 | 525 |
| Beispiel 10 | 5.0 | 6145 | 1390 |
| Beispiel 11 | 4.6 | >10000 | 3255 |
| Vergleichsbeispiel V1 | 3.5 | 10 | >5 |
| KK: Klebkraft | | | |
| SSZ: Scherstandzeiten | | | |

Die Beispiele 9 bis 11 belegen, dass sich Polyacrylathaftklebemasse durch UV-Fotoinitiatorfunktionalisierten-Goldpartikel vernetzen lassen. Im Vergleich zum Beispiel V1 steigt nach der UV-Bestrahlung der Beispiele 9 bis 11 die Kohäsion deutlich an. Dies äußert sich durch steigende Scherstandzeiten bei Raumtemperatur sowie 70°C.

## Patentansprüche

1. Polyacrylat-Haftklebemasse, enthaltend über Sulfid- oder Disulfid-Brücken mit dem Acrylatgerüst vernetzte Metall-, metallhaltige oder metallbeschichtete Partikel.

2. Haftklebemasse nach Anspruch 1, **dadurch gekennzeichnet, dass** die metallbeschichteten Partikel metallbeschichtete Polymerpartikel sind.

3. Haftklebemasse nach Anspruch 1 oder 2, **dadurch gekennzeichnet, dass** die Metallpartikel oder die Metallbeschichtung Gold, Silber oder Kupfer enthalten oder hieraus bestehen.

4. Haftklebemasse nach einem der Ansprüche 1 bis 3, **dadurch gekennzeichnet, dass** die Polyacrylatmasse
Acryl- und/oder Methacrylsäure-Einheiten entsprechend folgender Monomerstruktur in einem Anteil von 65 bis 100 Gew.-% enthalten: 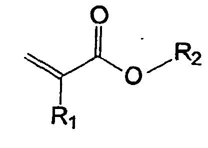 ,mit R₁ = H oder CH₃
und R₂ = einer Alkylkette mit 2 - 20 C-Atomen.

5. Haftklebemasse nach Anspruch 4, **dadurch gekennzeichnet, dass** die der Polyacrylatmasse zugrundeliegende Monomermasse 0 bis 35 Gew.-% funktionalisierte Vinylverbindungen enthält.

6. Verfahren zur Herstellung haftklebriger Polyacrylate durch radikalische Polymerisation, bei welchem der Monomermischung oder dem Prepolymer oder der fertigen Polyacrylathaftklebemasse
a) Metall-, metallhaltige oder metallbeschichtete Partikel, und b) mercaptofunktionalisierte, mit dem Metall reaktionsfähige Vernetzer zugesetzt werden.

7. Verfahren nach Anspruch 6, **dadurch gekennzeichnet, dass** die mercaptofunktionalisierten Vernetzer Photoinitiatoren der allgemeinen Formel (I) und/oder (II)
H-S-R (I)
R-S-S-R' (II)
sind, wobei R und R' unabhängig voneinander gewählt sind aus den folgenden Gruppen:
a) Benzophenon-, Acetophenon-, Benzil-, Benzoin-, Hydroxyalkylphenon-, Phenylcyclohexylketon-, Anthrachinon-, Thioxanthon-, Triazin-, oder Fluorenonreste, wobei jeder dieser Reste mit einem oder mehreren Halogenatomen und/oder einer oder mehreren Alkoxygruppen und/oder einer oder mehreren Aminogruppen oder Hydroxygruppen substituiert sein kann,
b) Reste, welche einen oder mehrere der unter a) genannten substituierten oder unsubstituierten Reste beinhalten.

8. Verfahren nach Anspruch 6 oder 7, **dadurch gekennzeichnet, dass** der Anteil der Vernetzer 0,01 bis 5 Gew.-%, bezogen auf die eingesetzten Monomere, beträgt.

9. Verfahren nach einem der Ansprüche 6 bis 8, **dadurch gekennzeichnet, dass** die Metallpartikel oder die Metallbeschichtung der Partikel aus Gold, Silber oder Kupfer bestehen, oder Gold, Silber oder Kupfer enthalten.

10. Verfahren nach einem der Ansprüche 6 bis 9, **dadurch gekennzeichnet, dass** für die Polymerisation eine Monomermischung verwendet wird, die Acryl- und/oder Methacrylsäure-Monomere der folgenden Struktur in einem Anteil von 65 bis 100 Gew.-% enthält: 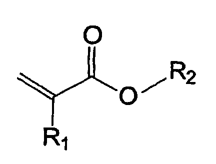 mit R₁ = H oder CH₃
und R₂ = einer Alkylkette mit 2 - 20 C-Atomen.

11. Verfahren nach Anspruch 10, **dadurch gekennzeichnet, dass** die Monomermasse 0 bis 35 Gew.-% funktionalisierte Vinylverbindungen enthält.

12. Verfahren nach einem der Ansprüche 6 bis 11, **dadurch gekennzeichnet, dass** die haftklebrigen Polyacrylate durch ultraviolette Strahlung in einem Wellenlängenbereich von 200 bis 400 nm vernetzt werden

13. Verwendung der Polyacrylat-Haftklebemasse nach einem der Ansprüche 1 bis 5 zur Herstellung von Haftklebstoffartikeln, insbesondere zur Herstellung eines Klebebandes mit einer ein- oder beidseitigen Beschichtung aus der Haftklebemasse.

## Claims

1. Pressure-sensitive polyacrylate adhesive comprising metal particles, metallic particles or metal-coated particles crosslinked via sulphide or disulphide bridges with the acrylate skeleton.

2. Adhesive according to Claim 1, **characterized in that** the metal-coated particles are metal-coated polymer particles.

3. Adhesive according to Claim 1 or 2, **characterized in that** the metal particles or the metal coating consist of or comprise gold, silver or copper.

4. Adhesive according to any one of Claims 1 to 3, **characterized in that** the polyacrylate composition comprises acrylic and/or methacrylic acid units corresponding to the following monomer structure in a fraction of 65% to 100% by weight: 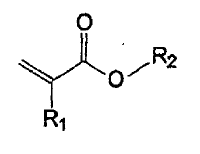 where R₁ = H or CH₃
and R₂ = an alkyl chain having 2 - 20 carbon atoms.

5. Adhesive according to Claim 4, **characterized in that** the monomer composition on which the polyacrylate composition is based comprises 0 to 35% by weight of functionalized vinyl compounds.

6. Process for producing pressure-sensitively adhesive polyacrylates by free-radical polymerization, in which the monomer mixture or the prepolymer or the finished pressure-sensitive polyacrylate adhesive is admixed with
a) metal particles, metallic particles or metal-coated particles, and
b) mercapto-functionalized crosslinkers which are reactive with the metal.

7. Process according to Claim 6, **characterized in that** the mercapto-functionalized crosslinkers are photoinitiators of the general formula (I) and/or (II)
H-S-R (I)
R-S-S-R' (II)
where R and R' are chosen independently of one another from the following groups:
a) benzophenone, acetophenone, benzyl, benzoin, hydroxyalkylphenone, phenyl cyclohexyl ketone, anthraquinone, thioxanthone, triazine or fluorenone radicals, it being possible for each of these radicals to be substituted by one or more halogen atoms and/or one or more alkoxy groups and/or one or more amino groups or hydroxy groups,
b) radicals which include one or more of the substituted or unsubstituted radicals specified under a).

8. Process according to Claim 6 or 7, **characterized in that** the fraction of the crosslinkers is 0.01 to 5% by weight, based on the monomers used.

9. Process according to any one of Claims 6 to 8, **characterized in that** the metal particles or the metal coating of the particles consist of gold, silver or copper or comprise gold, silver or copper.

10. Process according to any one of Claims 6 to 9, **characterized in that** for the polymerization a monomer mixture is used which comprises acrylic and/or methacrylic acid monomers of the following structure in a fraction of 65 to 100% by weight: 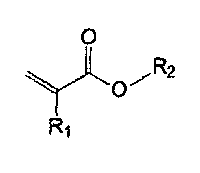 where R₁ = H or CH₃
and R₂ = an alkyl chain having 2 - 20 carbon atoms.

11. Process according to Claim 10, **characterized in that** the monomer composition comprises 0 to 35% by weight of functionalized vinyl compounds.

12. Process according to any one of Claims 6 to 11, **characterized in that** the pressure-sensitively adhesive polyacrylates are crosslinked by ultraviolet radiation in a wavelength range from 200 to 400 nm.

13. Use of the pressure-sensitive polyacrylate adhesive according to any one of Claims 1 to 5 for producing pressure-sensitive adhesive articles, in particular for producing an adhesive tape having a coating of the pressure-sensitive adhesive on one or both sides.

## Revendications

1. Matière autoadhésive à base de polyacrylate, contenant des particules métalliques, contenant un métal ou enrobées de métal, réticulé avec la charpente acrylate au moyen de ponts sulfure ou disulfure.

2. Matière autoadhésive selon la revendication 1, **caractérisée en ce que** les particules enrobées de métal sont des particules de polymère enrobées de métal.

3. Matière autoadhésive selon la revendication 1 ou 2, **caractérisée en ce que** les particules métalliques ou l'enrobage métallique contiennent de l'or, de l'argent ou du cuivre ou consistent en ceux-ci.

4. Matière autoadhésive selon l'une quelconque des revendications 1 à 3, **caractérisée en ce que** la matière polyacrylate contient en une proportion de 65 à 100 % en poids des motifs acide acrylique et/ou acide méthacrylique correspondant à la structure de monomère suivante : 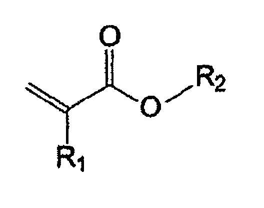 où R₁ = H ou CH₃
et R₂ représente une chaîne alkyle ayant de 2 à 20 atomes de carbone.

5. Matière autoadhésive selon la revendication 4, **caractérisée en ce que** la masse de monomères à la base de la matière polyacrylate contient de 0 à 35 % en poids de composés vinyliques fonctionnalisés.

6. Procédé pour la préparation de polyacrylates autoadhésifs, par polymérisation radicalaire, dans lequel on ajoute au mélange de monomères ou au prépolymère ou à la matière autoadhésive finale à base de polyacrylate
a) des particules métalliques, contenant un métal ou enrobées de métal,
et b) des agents de réticulation fonctionnalisés par un groupe mercapto, aptes à réagir avec le métal.

7. Procédé selon la revendication 6, **caractérisé en ce que** les agents de réticulation fonctionnalisés par un groupe mercapto sont des photoamorceurs de formule générale (I) et/ou (II)
H-S-R (I)
R-S-S-R' (II)
où R et R' sont choisis, indépendamment l'un de l'autre, dans les groupes suivants :
a) des radicaux benzophénone, acétophénone, benzile, benzoïne, hydroxyalkylphénone, phénylcyclohexylcétone, anthraquinone, thioxanthone, triazine ou fluorénone, chacun de ces radicaux pouvant être substitué par un ou plusieurs atomes d'halogène et/ou par un ou plusieurs groupes alcoxy, et/ou par un ou plusieurs groupes amino ou groupes hydroxy,
b) des radicaux qui comportent un ou plusieurs des radicaux substitués ou non substitués mentionnés en a).

8. Procédé selon la revendication 6 ou 7, **caractérisé en ce que** la proportion des agents de réticulation va de 0,01 à 5 % en poids, par rapport aux monomères utilisés.

9. Procédé selon l'une quelconque des revendications 6 à 8, **caractérisé en ce que** les particules métalliques ou l'enrobage métallique des particules consistent en or, argent ou cuivre ou contiennent de l'or, de l'argent ou du cuivre.

10. Procédé selon l'une quelconque des revendications 6 à 9, **caractérisé en ce qu'**on utilise pour la polymérisation un mélange de monomères qui contient en une proportion de 65 à 100 % des monomères acide acrylique et/ou acide méthacrylique de structure suivante : 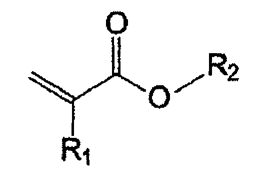 où R₁ = H ou CH₃
et R₂ représente une chaîne alkyle ayant de 2 à 20 atomes de carbone.

11. Procédé selon la revendication 10, **caractérisé en ce que** la masse de monomères contient de 0 à 35 % en poids de composés vinyliques fonctionnalisés.

12. Procédé selon l'une quelconque des revendications 6 à 11 **caractérisé en ce que** les polyacrylates autoadhésifs sont réticulés par irradiation ultraviolette dans une gamme de longueurs d'onde de 200 à 400 nm.

13. Utilisation de la matière autoadhésive à base de polyacrylate selon l'une quelconque des revendications 1 à 5, pour la fabrication d'articles autoadhésifs, en particulier pour la fabrication d'un ruban adhésif comportant un revêtement sur une face ou double face, à base de la matière autoadhésive.
